# EUROPÄISCHE PATENTSCHRIFT

(11) **EP 0 718 136 B1**
(45) Veröffentlichungstag und Bekanntmachung des Hinweises auf die Patenterteilung: **14.04.1999**
(21) Anmeldenummer: 95120014.6
(22) Anmeldetag: 19.12.1995
(51) Int. Cl.: B60J 7/22

(54) **Windabweiseranordnung für ein Kraftfahrzeugdach**
Wind deflector arrangement for vehicle roof
Dispositif de déflecteur de vent pour toit de véhicule

(30) Priorität: 22.12.1994 DE 4446016
(43) Veröffentlichungstag der Anmeldung: 26.06.1996
(73) Patentinhaber: WEBASTO KAROSSERIESYSTEME GmbH, D-82131 Stockdorf (DE)
(72) Erfinder: Wienchol, Otto, D-82049 Pullach (DE)
(74) Vertreter: Wiese, Gerhard

(56) Entgegenhaltungen:
- EP-A- 0 586 245
- DE-C- 4 012 569
- GB-A- 2 168 937

## Beschreibung

Die Erfindung befaßt sich mit einer Windabweiseranordnung für ein Kraftfahrzeugdach, das eine durch einen bewegbaren Deckel verschließbare Dachöffnung und einen entlang der Vorderkante der Dachöffnung angeordneten schwenkbaren Windabweiser aufweist, wobei der Windabweiser einen Windabweiserkörper und ein die Endkante des Windabweisers bildendes Abschlußprofil aufweist, das in eine an dem Windabweiserkörper ausgebildete Aufnahme eingefügt wird.

Bei vielen Fahrzeugdächern mit durch einen bewegbaren Deckel veschließbarer Dachöffnung werden Windabweiser eingesetzt, die bei Öffnen des Deckels nach oben ausschwenken. Um die Anpassung des Windabweisers an verschiedene Fahrzeugdächer zu erleichtern, wurde vorgeschlagen (DE-OS-34 15 361), den Körper des Windabweisers mindestens teilweise aus einem Profilteil auszubilden, dessen beide Seitenkanten von je einem Endstück abgedeckt werden. Somit wird zumindest der mittlere Teil des Windabweiserkörpers von einem Profilteil gebildet, das je nach der gewünschten Größe der Dachöffnung von einem als Meterware anlieferbaren Profilteil abgeschnitten wird. Bei einer Ausführungsform der bekannten Windabweiseranordnung wird der vorne liegende Bereich des Windabweiserkörpers formschlüssig mit einem Profilteil aus Gummi oder Kunststoff verbunden, welches den hinten liegenden Bereich, d.h. das Abschlußprofil, des Windabweiserkörpers darstellt.

Eine generelle Anforderung an Windabweiser für Fahrzeugdächer besteht darin, die bei Öffnen des bewegbaren Deckels verursachten Windgeräusche zu minimieren. Es hat sich gezeigt, daß die Minderung dieser störenden Windgeräusche sehr stark von dem Abschlußprofil des Windabweisers abhängt. Unglücklicherweise läßt sich die am besten geeignete Form des Abschlußprofils jedoch nicht theoretisch z.B. durch Berechnungen vorhersagen, sondern sie muß experimentell ermittelt werden. Bei den bekannten Windabweiseranordnungen ist eine Änderung des Abschlußprofils jedoch mit erheblichem Aufwand verbunden, was oftmals dazu führt, daß sich Hersteller von Windabweisern mit nicht optimalen Lösungen zufriedengeben, da eine weitere Verfeinerung der Ausbildung des Abschlußprofils dem experimentellen und somit wirtschaftlichen Aufwand nicht mehr Rechnung tragen würde. Außerdem ist die günstigste Form des Abschlußprofils für unterschiedliche Fahrzeugdächer verschieden.

Der Erfindung liegt die Aufgabe zugrunde, die Ausbildung von Windabweisem mit geeigneten Abschlußprofilen zu erleichtern und eine optimale Anpassung des Windabweisers an ein gegebenes Fahrzeugdach in wirtschaftlicher Weise zu ermöglichen.

Diese Aufgabe wird bei der vorliegenden Erfindung dadurch gelöst, daß der Windabweiserkörper als universelles Grundprofil ausgebildet ist und das Abschlußprofil aus einer Gruppe unterschiedlich gestalteter Abschlußprofile ausgewählt ist, die wahlweise in die Aufnahme einfügbar sind.

Weitere Ausgestaltungen der Erfindung ergeben sich aus den Unteransprüchen.

Insbesondere kann der Windabweiserkörper ein Mittelstück und zwei daran anschließende, das Mittelstück seitlich abschließende Endstücke aufweisen, um die Breite der Windabweiseranordnung einfach an unterschiedlich breite Dachöffnungen anpassen zu können.

Das Mittelstück des Windabweiserkörpers kann zweckmäßig als Strangpreßprofil, vorzugsweise als Leichtmetall-Strangpreßprofil, ausgebildet sein, und die Abschlußprofile können aus Gummi oder aus Kunststoff gefertigt sein.

Ferner kann mindestens das Mittelstück des Windabweiserkörpers als Hohlprofil ausgebildet sein, wodurch das Gewicht des Windabweisers gering gehalten werden kann.

Falls bevorzugt, kann statt einem Abschlußprofil mit kontinuierlichem Querschnitt ein Abschlußprofil benutzt werden, welches Aussparungen aufweist, oder es können mehrere einzelne Abschlußprofile eingesetzt werden, wobei die besagten einzelnen Abschlußprofile unterschiedliche Querschnitte aufweisen.

Bevorzugte Ausführungsbeispiele der Erfindung werden im folgenden unter Bezugnahme auf die beiliegenden Zeichnungen im Detail beschrieben. Es zeigen:
- FIG. 1: eine schematische Ansicht eines Windabweisers mit einem durchgehenden Abschlußprofil,
- FIG. 2: einen Querschnitt durch einen Windabweiserkörper und ein Abschlußprofil,
- FIG. 3(a) bis (c): Querschnitte durch einen Windabweiserkörper sowie durch unterschiedliche Abschlußprofile mit verlängerter Vorderfläche,
- FIG. 4: eine perspektivische Ansicht eines Windabweiserkörpers, in dessen Aufnahme ein Abschlußprofil eingefügt wurde, welches Aussparungen aufweist.

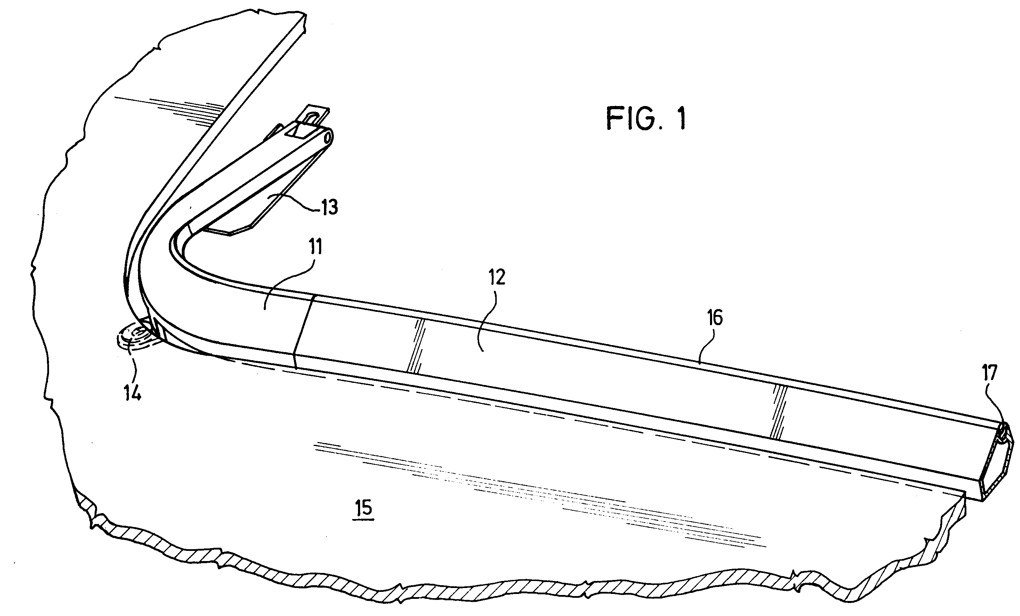

FIG. 1 zeigt einen Windabweiser, bei welchem die vorliegende Erfindung eingesetzt werden kann. Der Windabweiserkörper weist zwei Eckstücke 11 (von denen in FIG. 1 nur eines zu sehen ist) und ein Mittelstück 12 auf. Der Windabweiser wird bei dem Öffnen eines (nicht gezeigten) Dachdeckels, z.B. eines Schiebedeckels, durch eine Feder 13 nach oben ausgestellt, bis sich ein an dem Windabweiserendstück 11 angebrachter Anschlag 14 von unten gegen das Fahrzeugdach 15 anlegt und somit die Ausstellbewegung des Windabweisers beendet. Wird der Dachdeckel geschlossen, so wird der Windabweiser gegen die Kraft der Feder 13 zurück nach unten gedrückt. Die Endkante des Windabweiserkörpers wird von einem Abschlußprofil 16 gebildet, das in einer Aufnahme 17 aufgenommen wird, die zumindest in dem Mittelstück 12 und falls erwünscht auch in den Endstücken 11 ausgebildet ist.

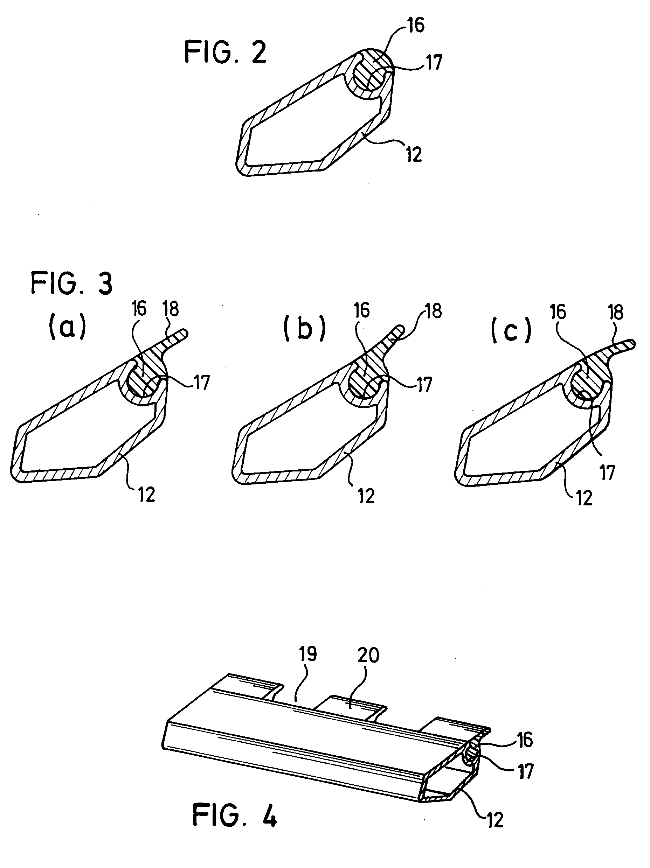

FIG. 2 zeigt einen Querschnitt durch einen Windabweiserkörper mit eingefügtem Abschlußprofil. Der in FIG. 2 gezeigte Querschnitt gilt in erster Linie für das Mittelstück 12 des Windabweisers. Es versteht sich jedoch, daß zumindest ein dem Mittelstück 12 zugewendeter Teil der Endstücke 11 den gleichen oder einen ähnlichen Querschnitt aufweisen kann. Bei der in FIG. 2 gezeigten Ausführungsform ist das Mittelstück 12 als ein Hohlprofil ausgebildet, um das Gewicht des Windabweisers gering zu halten. Vorzugsweise ist das Mittelstück 12 als Leichtmetall-Strangpreßprofil ausgebildet. Der Windabweiserkörper weist eine Aufnahme 17 auf, in die das Abschlußprofil 16 eingefügt wird. Die unterschiedlichen Abschlußprofile 16 werden vorzugsweise aus Gummi oder aus Kunststoff ausgebildet. Bei der in FIG. 2 gezeigten Ausführungsform hat das Abschlußprofil 16 die Form einer Abschlußkante, die so bemessen ist, das die Ober- und die Unterseiten des Windabweiserkörpers und des Abschlußprofils 16 bündig aneinander anschließen.

Die FIG. 3(a) bis (c) zeigen ebenfalls einen Querschnitt des Windabweiserkörpers, d.h. des Mittelstücks 12 bzw. des daran anschließenden Teils der Endstücke 11, jedoch ist bei dieser Ausführungsform das Abschlußprofil 16 mit einer verlängerten Vorderfläche 18 ausgebildet, wobei sich die Abschlußprofile 16 der FIG. 3(a) bis (c) nur durch die Neigung der besagten Vorderfläche 18 unterscheiden. Wird der Windabweiser in einem speziellen Fahrzeugdach montiert, wobei vorgesehen ist, daß der Windabweiser ein Abschlußprofil mit verlängerter Vorderfläche aufweist, so kann durch Auswechseln der einzelnen Abschlußprofile gemäß den FIG. 3(a) bis (c) die optimale Form des Abschlußprofils ermittelt werden. Es versteht sich, daß die Form der Abschlußprofile in keiner Weise begrenzt ist, und daß diese einzig in der Querschnittsform des in die Aufnahme 17 einzufügenden Bereichs übereinstimmen müssen.

FIG. 4 zeigt ein Abschlußprofil 16, das sich von dem in den FIG. 3(a) bis (c) gezeigten Abschlußprofil 16 dadurch unterscheidet, daß in der verlängerten Vorderfläche 18 (siehe FIG. 3(a) bis (c)) Aussparungen 19 vorgesehen sind. Es versteht sich, daß die Form der Aussparungen in keiner Weise begrenzt ist, so daß die verbleibenden einzelnen Vorderflächen 20 jede gewünschte Form annehmen können, wie z.B. rechtwinklig, trapezförmig, halbkreisförmig, etc.

Bei der vorliegenden Beschreibung wurde auf eine Windabweiseranordnung Bezug genommen, deren in Fahrzeugrichtung vorderer Bereich bei Öffnen des Dachdeckels um eine in Fahrzeugrichtung im hinteren Teil der Windabweiseranordnung befindliche Schwenkachse nach oben ausgestellt wird (siehe FIG. 1). Die Erfindung kann natürlich auf jede andere Windabweiseranordnung angewendet werden, wie z.B. auf eine Windabweiseranordnung mit vorneliegender Schwenkachse, wie sie in DE-OS-34 15 361 gezeigt ist.

## Patentansprüche

1. Windabweiseranordnung für ein Kraftfahrzeugdach, das eine durch einen bewegbaren Deckel verschließbare Dachöffnung und einen entlang der Vorderkante der Dachöffnung angeordneten schwenkbaren Windabweiser aufweist, wobei der Windabweiser einen Windabweiserkörper (11, 12) und ein die Endkante des Windabweisers bildendes Abschlußprofil (16) aufweist, das in eine an dem Windabweiserkörper (11, 12) ausgebildete Aufnahme (17) eingefügt wird, dadurch gekennzeichnet, daß der Windabweiserkörper (11, 12) als universelles Grundprofil ausgebildet ist und das Abschlußprofil (16) aus einer Gruppe unterschiedlich gestalteter Abschlußprofile ausgewählt ist, die wahlweise in die Aufnahme (17) einfügbar sind.

2. Windabweiseranordnung für ein Kraftfahrzeugdach nach Anspruch 1, dadurch gekennzeichnet, daß der Windabweiserkörper ein Mittelstück (12) und zwei daran anschließende, das Mittelstück (12) seitlich abschließende Endstücke (11) aufweist.

3. Windabweiseranordnung für ein Kraftfahrzeugdach nach einem der vorhergehenden Ansprüche, dadurch gekennzeichnet, daß das Mittelstück (12) des Windabweiserkörpers als Strangpreßprofil ausgebildet ist.

4. Windabweiseranordnung für ein Kraftfahrzeugdach nach einem der vorhergehenden Ansprüche, dadurch gekennzeichnet, daß mindestens das Mittelstück (12) des Windabweiserkörpers als ein Hohlprofil ausgebildet ist

5. Windabweiseranordnung für ein Kraftfahrzeugdach nach einem der vorhergehenden Ansprüche, dadurch gekennzeichnet, daß die Abschlußprofile (16) aus Gummi gefertigt sind.

6. Windabweiseranordnung für ein Kraftfahrzeugdach nach einem der vorhergehenden Ansprüche, dadurch gekennzeichnet, daß die Abschlußprofile (16) aus Kunststoff gefertigt sind.

7. Windabweiseranordnung für ein Kraftfahrzeugdach nach einem der vorhergehenden Ansprüche, dadurch gekennzeichnet, daß das Abschlußprofil (16) Aussparungen aufweist.

8. Windabweiseranordnung für ein Kraftfahrzeugdach nach einem der vorhergehenden Ansprüche, dadurch gekennzeichnet, daß die Endkante des Windabweiserkörpers (11, 12) von mehreren einzelnen Abschlußprofilen (16) gebildet wird, wobei die besagten einzelnen Abschlußprofile (16) unterschiedliche Querschnitte aufweisen.

## Claims

1. A wind deflector arrangement for a motor vehicle roof which has a roof opening adapted to be closed by a movable cover and a pivotable wind deflector disposed along the front edge of the roof opening, the wind deflector having a wind deflector body (11, 12) and an end section (16) which forms the free edge of the wind deflector and which is fitted into a housing (17) constructed on the wind deflector body (11, 12), characterised in that the wind deflector body (11, 12) is constructed as a universal base section and the free edge section (16) is selected from a group of variously constructed free edge sections which can optionally be fitted into the housing (17).

2. A wind deflector arrangement for a motor vehicle roof according to Claim 1, characterised in that the wind deflector body comprises a middle portion (12) and, adjacent to it, end portions (11) which close off the sides of the middle portion (12).

3. A wind deflector arrangement for a motor vehicle roof according to one of the preceding Claims, characterised in that the middle portion (12) of the wind deflector body is constructed as an extruded section.

4. A wind deflector arrangement for a motor vehicle roof according to one of the preceding Claims, characterised in that at least the middle portion (12) of the wind deflector body is constructed as a hollow section.

5. A wind deflector arrangement for a motor vehicle roof according to one of the preceding claims, characterised in that the free edge sections (16) are made from rubber.

6. A wind deflector arrangement for a motor vehicle roof according to one of the preceding Claims, characterised in that the free edge sections (16) are made from synthetic plastics material.

7. A wind deflector arrangement for a motor vehicle roof according to one of the preceding Claims, characterised in that the free edge section (16) has recesses.

8. A wind deflector arrangement for a motor vehicle roof according to one of the preceding Claims, characterised in that the end edge of the wind deflector body (11, 12) is formed by a plurality of individual free edge sections (16), the said individual free edge section (16) having different cross-sections.

## Revendications

1. Dispositif de déflecteur de vent pour un toit de véhicule automobile, présentant une ouverture de toit pouvant être fermée au moyen d'un couvercle déplaçable et un déflecteur de vent susceptible de pivoter, disposé le long de l'arête avant de l'ouverture de toit, le déflecteur de vent présentant un corps de déflecteur de vent (11, 12) et un profil de fermeture (16) constituant l'arête d'extrémité du déflecteur de vent, profil inséré dans un logement (17) réalisé sur le corps de réflecteur de vent (11, 12),
caractérisé en ce que
le corps de réflecteur de vent (11, 12) est réalisé sous la forme de profil de base universel et le profil de fermeture (16) est sélectionné parmi un groupe de profils de fermeture de configurations différentes qui peuvent être insérés à volonté dans le logement (17).

2. Dispositif de déflecteur de vent pour un toit de véhicule automobile selon la revendication 1,
caractérisé en ce que
le corps de déflecteur de vent présente une pièce médiane (12) et deux pièces d'extrémité (11) s'y raccordant, fermant latéralement la pièce médiane (12).

3. Dispositif de déflecteur de vent pour un toit de véhicule automobile selon l'une des revendications précédentes, caractérisé en ce que
la pièce médiane (12) du corps de déflecteur de vent est réalisée sous la forme de profité d'extrusion.

4. Dispositif de déflecteur de vent pour un toit de véhicule automobile selon l'une des revendications précédentes, caractérisé en ce qu'
au moins la pièce médiane (12) du corps de déflecteur de vent est réalisée sous la forme d'un profité creux.

5. Dispositif de déflecteur de vent pour un toit de véhicule automobile selon l'une des revendications précédentes, caractérisé en ce que
les profilés de fermeture (16) sont fabriqués en caoutchouc.

6. Dispositif de déflecteur de vent pour un toit de véhicule automobile selon l'une des revendications précédentes, caractérisé en ce que
les profilés de fermeture (16) sont fabriqués en matière plastique.

7. Dispositif de déflecteur de vent pour un toit de véhicule automobile selon l'une des revendications précédentes, caractérisé en ce que
le profilé de fermeture (16) présente des évidements.

8. Dispositif de déflecteur de vent pour un toit de véhicule automobile selon l'une des revendications précédentes, caractérisé en ce que
l'arête d'extrémité du corps de déflecteur de vent (11, 12) est constituée par plusieurs profilés de fermeture (16) individuels, ces profilés de fermeture (16) individuels présentant des sections transversales différentes.
